# EUROPEAN PATENT APPLICATION

(11) **EP 4 293 587 A1**
(43) Date of publication of application: **20.12.2023**
(21) Application number: 21925667.4
(22) Date of filing: 12.02.2021
(51) Int. Cl.: G06Q 10/06, G06Q 50/04

(54) **APPARATUS CLASSIFICATION SYMBOL IDENTIFYING DEVICE**

(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: IIJIMA, Takuya, Kawasaki-shi, Kanagawa 212-0013 (JP); YAMASHITA, Lan, Tokyo 105-0023 (JP); IWAMASA, Mikito, Tokyo 105-0023 (JP); FUJIWARA, Koji, Tokyo 105-0023 (JP)
(74) Representative: AWA Sweden AB
(86) International application number: PCT/JP2021/005356
(87) International publication number: WO 2022/172416

(57) **Abstract**

An instrument classification symbol specifying device includes an acquiring unit, a determining unit, and an output control unit. The acquiring unit acquires instrument information and a standardized information model. The instrument information is related to an instrument included in an industrial facility. The standardized information model includes instrument classification symbols of a plurality of instruments. The determining unit determines an instrument classification symbol corresponding to the instrument on the basis of the instrument information. The instrument classification symbol is determined from the instrument classification symbols included in the information model. The output control unit outputs a result of mapping between the instrument and the instrument classification symbol determined by the determining unit.

## Description

### FIELD

Embodiments of the present invention relate to an instrument classification symbol specifying device.

### BACKGROUND

Conventionally, international standardization efforts related to instrument classification, such as standards by IEC 61987 (IEC CDD LoP) and a private standardization consortium "eCl@ss", have been made for instruments such as a measuring instrument and a control instrument used in industrial facilities such as plants. In recent years, in accordance with the spread of cyber physical system (CPS) and internet of things (IoT), great importance has been attached to interoperability related to a measuring instrument and a control instrument, devices that control these instruments, information communication related thereto, and the like.

For improvement of interoperability, it is useful to define, with standards conforming to standard specifications, instrument configurations and control methods of various instruments included in industrial facilities. For this reason, an administrator or the like sometimes performs mapping of individual instruments used in a plant or the like to instrument classification symbols based on standard specifications.

### CITATION LIST

### Patent Literature

Patent Literature 1: JP 2019-523425 W

### SUMMARY OF THE INVENTION

### Problem to be Solved by the Invention

However, in the related art, work of mapping individual instruments used in an industrial facility to instrument classification symbols in standard specifications, to which the instruments belong, has a high load for the administrator or the like. It is likely that omission or the like occurs.

### Means for Solving Problem

An instrument classification symbol specifying device according to an embodiment includes an acquiring unit, a determining unit, and an output control unit. The acquiring unit acquires instrument information and a standardized information model. The instrument information is related to an instrument included in an industrial facility. The standardized information model includes instrument classification symbols of a plurality of instruments. The determining unit determines an instrument classification symbol corresponding to the instrument on the basis of the instrument information. The instrument classification symbol is determined from the instrument classification symbols included in the information model. The output control unit outputs a result of mapping between the instrument and the instrument classification symbol determined by the determining unit.

### BRIEF DESCRIPTION OF DRAWINGS

FIG. 1 is a diagram illustrating an example of an industrial management system according to a first embodiment.
FIG. 2 is a functional block diagram illustrating an example of a functional configuration of a gateway device according to the first embodiment.
FIG. 3 is a diagram illustrating an example of a P&ID diagram according to the first embodiment.
FIG. 4 is a diagram illustrating another example of the P&ID diagram according to the first embodiment.
FIG. 5 is a diagram illustrating an example of a program list according to the first embodiment.
FIG. 6 is a diagram illustrating an example of a list of PV variables according to the first embodiment.
FIG. 7 is a diagram illustrating an example of a list of LP variables according to the first embodiment.
FIG. 8 is a diagram illustrating an example of an information model according to the first embodiment.
FIG. 9 is a diagram illustrating an example of instrument classification symbols according to the first embodiment.
FIG. 10 is a diagram illustrating an example of an overview of a flow up to DLOP determination according to the first embodiment.
FIG. 11 is a diagram illustrating an example of classification categories of characteristics of instruments in the first embodiment.
FIG. 12 is a diagram illustrating an example of properties of LOPD in the first embodiment.
FIG. 13 is a diagram illustrating an example of an OLOP corresponding to an instrument whose measurement target is a flow rate in the first embodiment.
FIG. 14 is a diagram illustrating an example of a determination table according to the first embodiment.
FIG. 15 is a diagram illustrating an example of a display screen of a determination result according to the first embodiment.
FIG. 16 is a diagram illustrating another example of the display screen of the determination result according to the first embodiment.
FIG. 17 is a flowchart illustrating an example of a flow of instrument classification symbol specifying process according to the first embodiment.
FIG. 18 is a diagram illustrating an example of an industrial management system according to a second embodiment.

### DETAILED DESCRIPTION

### (First Embodiment)

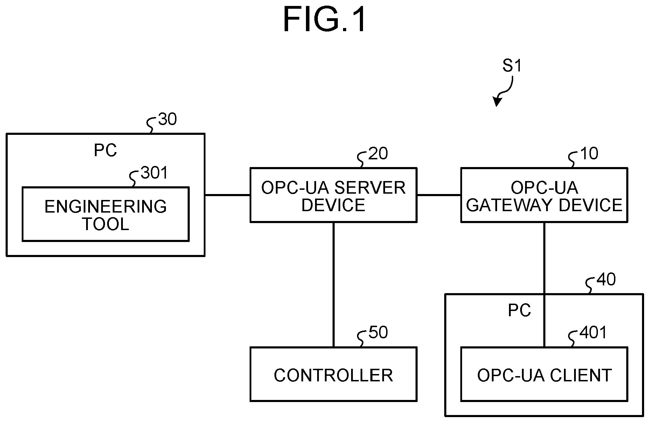

FIG. 1 is a diagram illustrating an example of an industrial management system S1 according to a first embodiment. The industrial management system S1 executes control and monitoring of an industrial facility such as a plant or a factory. The industrial facilities managed by the industrial management system S1 in the present embodiment include various kinds of a measuring instrument and a control instrument such as a flowmeter, a pressure gauge, and a thermometer. In the following explanation, various measuring instruments and control instruments are simply referred to as instruments.

The industrial management system S1 in the present embodiment performs information communication conforming to an OPC unified architecture (OPC-UA). The OPC-UA is an interface rule related to data exchange standardized by international electrotechnical commission (IEC) 62541. Note that the OPC-UA is an example of standard specifications, and the standard specifications to be applied to the industrial management system S1 are not limited to this.

As illustrated in FIG. 1, the industrial management system S1 includes an OPC unified architecture (OPC-UA) gateway device 10, an OPC-UA server device 20, a personal computer (PC) 30, a PC 40, and a controller 50.

The controller 50 is a device that controls various instruments included in the industrial facility. The controller 50 is, for example, a controller for a distributed control system (DCS), a programmable logic controller (PLC), or the like.

The PC 30 is an information processing device including an engineering tool 301.

The engineering tool 301 is software (a program) for managing the controller 50. As an example, the engineering tool 301 executes generation of an application program to be executed by the controller 50, transmission of the generated application program to the controller 50, monitoring of processing executed by the controller 50, and the like. In an example illustrated in FIG. 1, the PC 30 is connected to the controller 50 via the OPC-UA server device 20. However, the PC 30 and controller 50 may be connected not via the OPC-UA server device 20.

The OPC-UA server device 20 (hereinafter referred to as server device 20) is connected to the PC 30 and the controller 50 according to an OPC-UA standard and executes various kinds of control processing. Note that the OPC-UA server device 20 may be integrated with the PC 30.

The OPC-UA gateway device 10 (hereinafter referred to as gateway device 10) is a repeater that relays communication with the OPC-UA server device 20.

The gateway device 10 has a function of associating local instrument information used in the engineering tool 301 and the server device 20 with instrument classification symbols included in an information model conforming to standard specifications. In the present embodiment, associating local instrument information and instrument classification symbols conforming to the standard specifications is referred to as mapping. The gateway device 10 is an example of an instrument classification symbol specifying device in the present embodiment.

Examples of the information model conforming to the standard specifications include "IEC 61987: series Process Automation", "IEC 61360-4: Electric/electronic components", and "IEC 62683 series: Low voltage switchgear". In the present embodiment, "IEC 61987" is mainly described as an example. These information models include a data dictionary (a Common Data Dictionary: CDD) in which names of instruments used in industrial facilities are defined and list of properties (LOPs) in which characteristics of the instruments are defined. In the information model, various instruments used in industrial facilities are defined in a hierarchical data structure. In the information model, instrument classification symbols indicating classifications of instruments are defined. Specific content of the information model is will be described later.

The PC 40 is an information processing device including an OPC-UA client 401.

The OPC-UA client 401 is software (a program) for providing a user interface conforming to the OPC-UA standard to a user.

The gateway device 10, the server device 20, the PC 30, and the PC 40 each include, for example, a control device such as a central processing unit (CPU), a storage device such as a read only memory (ROM) and a random access memory (RAM), an external storage device such as a hard disk drive (HDD) and a CD drive device, a display device (a display unit) such as a display device, and an input device such as a keyboard and a mouse and have a hardware configuration in which a normal computer is used. Note that the display device and the input device may be provided outside the gateway device 10.

Next, details of the functions of the gateway device 10 will be described.

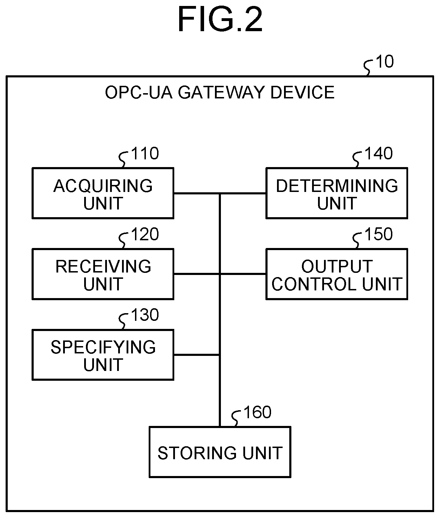

FIG. 2 is a functional block diagram illustrating an example of a functional configuration of the gateway device 10 according to the first embodiment. As illustrated in FIG. 2, the gateway device 10 includes an acquiring unit 110, a receiving unit 120, a specifying unit 130, a determining unit 140, an output control unit 150, and a storing unit 160.

The storing unit 160 stores programs and data of various kinds of processing executed by the gateway device 10. For example, the storing unit 160 stores instrument information and an information model acquired by the acquiring unit 110 described later. The storing unit 160 stores a determination table used by the determining unit 140 described later. The storing unit 160 is configured by, for example, a storage device such as an HDD.

The acquiring unit 110 acquires instrument information related to instruments included in an industrial facility and a standardized information model including instrument classification symbols of a plurality of instruments.

The instrument information is information related to design or management of instruments in the industrial facility. As an example, the instrument information includes a piping and instrumentation flow diagram (P&ID diagram, piping instrumentation diagram) defining configurations of instruments included in the industrial facility, definition information of processing for controlling the instruments included in the industrial facility, and definition information of variables used in the processing. Note that a specific example of the instrument information will be described later.

In the present embodiment, as one example, the acquiring unit 110 acquires instrument information from the server device 20.

While an acquisition source from which the acquiring unit 110 acquires the information model and means for the acquisition are not particularly limited, the information model may be acquired by being downloaded from a network such as the Internet. Alternatively, the information model may be captured from another information processing device or a storage medium.

The receiving unit 120 receives various kinds of operation by the user through input devices such as a keyboard and a mouse. The receiving unit 120 may receive operation information of the user input via a network.

The receiving unit 120 receives, for example, user's selection on a selection input screen displayed on the display device by the output control unit 150, which will be described later.

The specifying unit 130 specifies, on the basis of the instrument information, characteristics of an instrument and characteristics of a target to be measured or controlled by the instrument. More specifically, the specifying unit 130 specifies a classification category defined in the information model corresponding to the characteristics of the instrument included in the instrument information and the characteristics of the target to be measured or controlled by the instrument.

The determining unit 140 determines, from instrument classification symbols included in the information model, an instrument classification symbol corresponding to the instrument on the basis of the instrument information. More specifically, the determining unit 140 determines the instrument classification symbol corresponding to the instrument on the basis of a determination table, in which the characteristics of the instrument and the characteristics of the target to be measured or controlled by the instrument are associated with the instrument classification symbol, the characteristics of the instrument specified by the specifying unit 130, and the characteristics of the target to be measured or controlled by the instrument. In the present embodiment, the characteristics of the target to be measured or controlled by the instrument include the type of information used by the instrument for operation, the target to be measured or controlled by the instrument, the property of the target to be measured or controlled by the instrument, and a measurement unit of the target to be measured or controlled by the instrument. The determination table is an example of determination information in the present embodiment. Details of the determination table will be described later.

The output control unit 150 controls output of information to a display device or the like. For example, the output control unit 150 outputs a result of mapping between the instrument and the instrument classification symbol determined by the determining unit 140. For example, the output control unit 150 causes the display device to display the result of the mapping between the instrument and the instrument classification symbol determined by the determining unit 140.

When the specifying unit 130 has difficulty in specifying the characteristics of the instrument and the characteristics of the target to be measured or controlled by the instrument, the output control unit 150 causes the display device to display candidates of the characteristics of the instrument or candidates of the characteristics of the target to be measured or controlled by the instrument. Additionally, when, for example, the user performs operation of selecting any one of the displayed candidates for an item not successfully specified by the specifying unit 130, the above-described receiving unit 120 receives the selection.

Note that a method of the output by the output control unit 150 is not limited to the output to the display device of the gateway device 10. For example, the output control unit 150 may cause a display device provided outside the gateway device 10 to display information. Moreover, the output control unit 150 may transmit information to another information processing device. In addition, processing of storing the result of the mapping between the instrument and the instrument classification symbol in the storing unit 160 may be included in output processing.

The output control unit 150 may output classification categories of the characteristics of the instrument specified by the specifying unit 130 and the characteristics of the target to be measured or controlled.

Next, instrument information in the present embodiment will be described. As described above, the instrument information in the present embodiment includes the P&ID diagram, the definition information of the processing for controlling the instrument included in the industrial facility, and the definition information of the variable used in the processing.

First, the P&ID diagram included in the instrument information will be described.

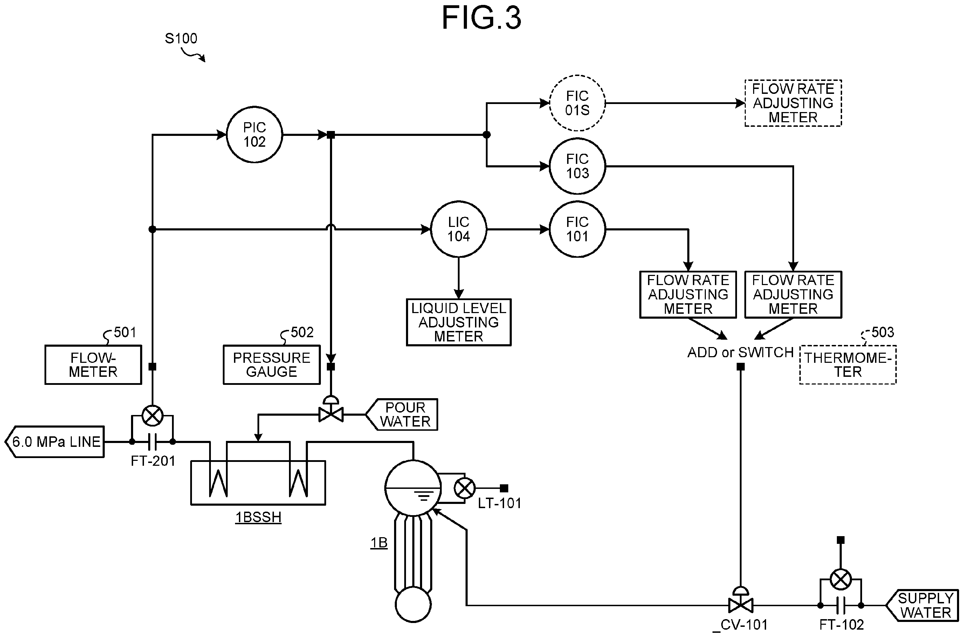

FIG. 3 is a diagram illustrating an example of the P&ID diagram according to the first embodiment. More specifically, FIG. 3 is a P&ID diagram representing a boiler control system S100. The boiler control system S100 is an example of an industrial facility to be managed by the industrial management system S 1 in the present embodiment. The boiler control system S100 includes a plurality of instruments. For example, in the example illustrated in FIG. 3, the boiler control system S100 includes a flowmeter 501, a pressure gauge 502, and a thermometer 503. Note that, although the boiler control system S100 includes many instruments besides the above, explanation of the instruments is omitted.

In FIG. 3, for explanation, names of the instruments such as "flowmeter" are described on the P&ID diagram as text. However, those instruments may be expressed by symbols or codes.

An example of description of the P&ID diagram is not limited to the example illustrated in FIG. 3. The P&ID diagram may include, for example, a graphic language such as a ladder diagram (LD), a function block diagram (FBD), or a sequential function chart (SFC).

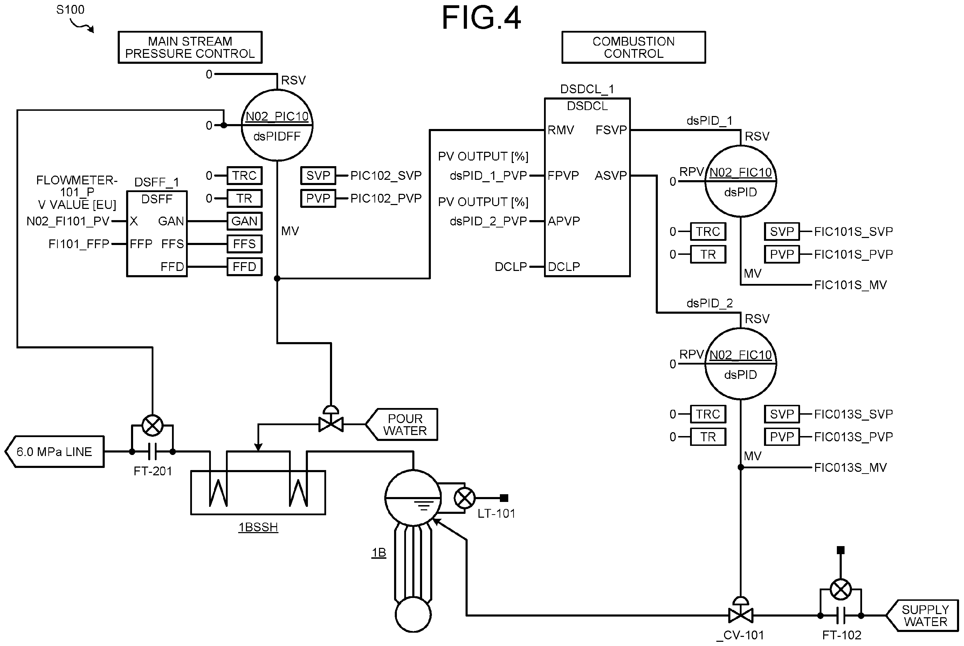

FIG. 4 is a diagram illustrating another example of the P&ID diagram according to the first embodiment. In the example illustrated in FIG. 4, part of the configuration of the boiler control system S100 is represented by the FBD. The P&ID diagram may be indicated by a sign (symbol) that is unique to a user such as an administrator of the industrial facility.

The P&ID diagram is created by, for example, the engineering tool 301 through the operation of an engineer when the boiler control system S100 is designed. In a case where an instrument included in the boiler control system S100 is added or replaced, or in a case where the configuration of the boiler control system S100 is changed, the P&ID diagram is also changed under the operation of the engineer. Note that the creation and the change of the P&ID diagram may be automated or semi-automated.

Next, out of pieces of information included in the instrument information, definition information of processing for controlling an instrument included in the industrial facility and definition information of variables used in the processing will be described.

The definition information of the processing for controlling the instrument is, for example, a list of programs for controlling the instrument included in the industrial facility. More specifically, the programs are application programs executed by the controller 50. The application programs and the list thereof are created by the engineering tool 301. In addition, the program list and the variable list created by the engineering tool 301 are also referred to as tag information.

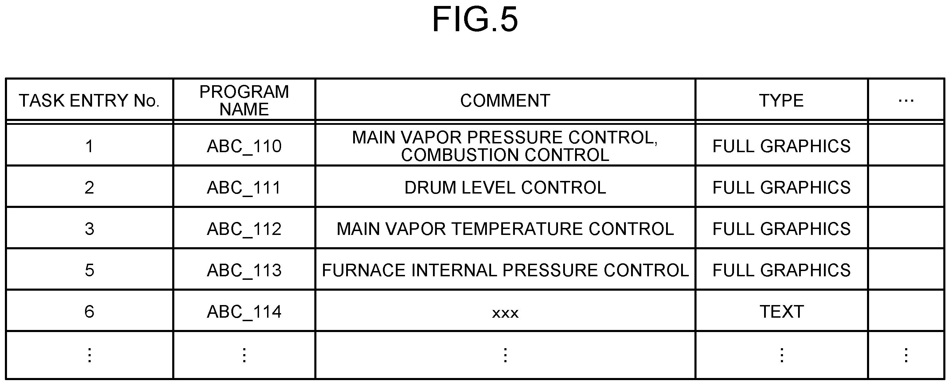

FIG. 5 is a diagram illustrating an example of a program list according to the first embodiment. In the program list, as one example, a task entry number (No.), a program name, a comment, and a type are associated with each other. Note that, the program list may further include other items. The task entry number is a number for identifying the programs. The type is a type of program language. For instance, "full graphics" is a program described in a graphic language such as FBD. The comment is text data for explaining overviews of the programs and is decided by a designer or the like. In general, content of the comment is related to characteristics of an instrument controlled by the programs. Note that the program list is also referred to as tag list or task list.

Next, definition information of variables used in processing will be described. The variable definition information is a list of tag variables in which a tag, a name, and attribute information of a variable related to the operation of the instrument are associated with each other out of variables used in the application programs.

The variables used in the application programs include an indicator variable (PV variable) and a controller variable (LP variable). An input value from an instrument connected to the controller 50 is input to the PV variable. An output value from an application program executed by the controller 50, that is, an input value from the controller 50 to the instrument, is input to the LP variable.

In the present embodiment, a list of PV variables and a list of LP variables are examples of definition information. The list of the PV variables and the list of the LP variables are created by the engineering tool 301 when the application programs are created.

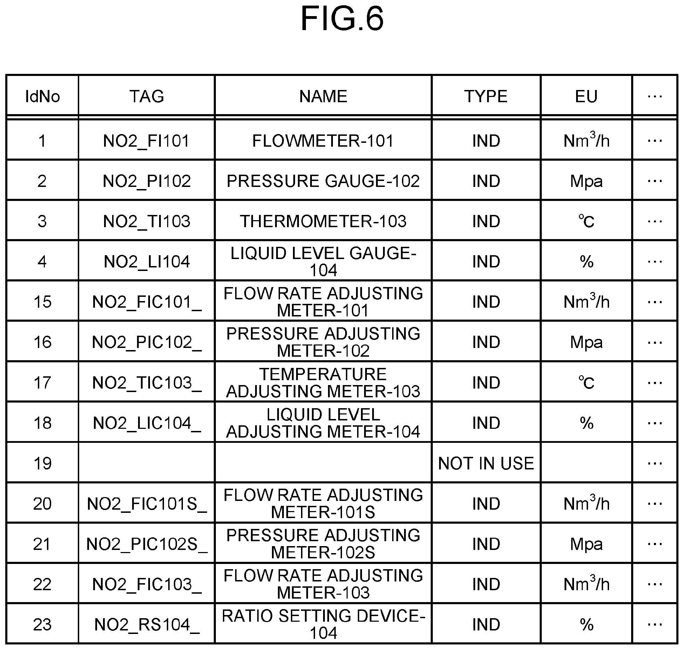

FIG. 6 is a diagram illustrating an example of a list of PV variables according to the first embodiment. As illustrated in FIG. 6, in the list of PV variables, IdNo., TAG (tag), NAME (name), TYPE (variable type), and EU (unit) are associated with each other. The TAG (tag) is a variable name used in the application programs. In general, content of the NAME (variable name) in the list of PV variables includes information related to an instrument that outputs a value input to the PV variable. The EU (unit) is a unit of a value input from an instrument that outputs a value input to the PV variable. The variable type and the unit are examples of attribute information of the PV variables. The list of PV variables may further include other attribute information.

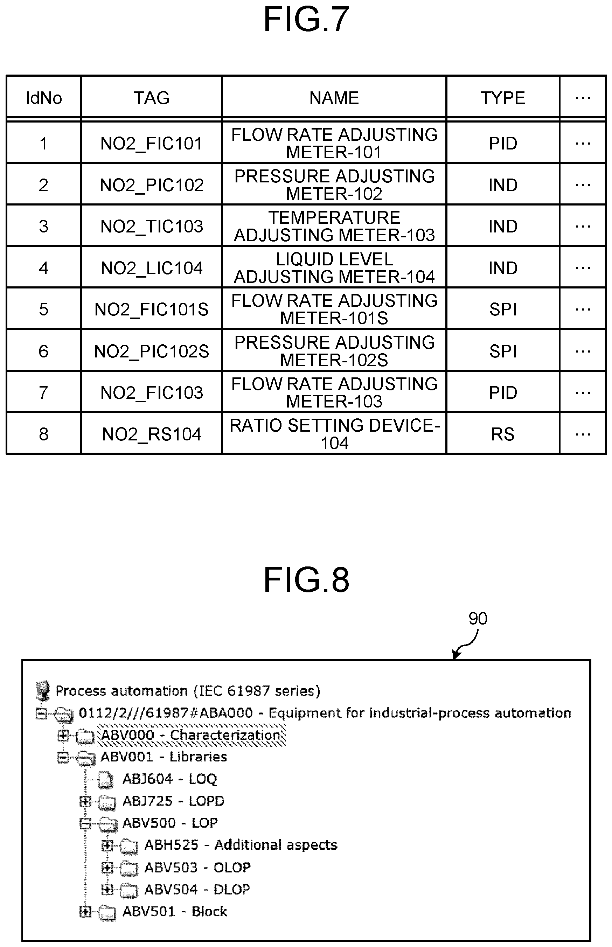

FIG. 7 is a diagram illustrating an example of a list of LP variables according to the first embodiment. As illustrated in FIG. 7, in the list of LP variables, IdNo., TAG (tag), NAME (name), and TYPE (variable type) are associated with each other. In general, content of the NAME (variable name) in the list of LP variables includes information related to an instrument to which values of the LP variables are input.

The PV variables and the LP variables are also referred to as tag variables. In the following explanation, in the present exemplary embodiment, the list of PV variables and the list of LP variables are collectively referred to as variable list. Note that the variable list is not limited to the list of PV variables and the list of LP variables and may include a list of other variables. As described above, the program list and the variable list are also referred to as tag information.

In general, names of instruments included in the program list and the variable list are likely to ways of calling specific to each industrial facility, a manufacturer that manufactures the instruments, or a company that designs the industrial facility. In other words, names or codes of instruments included in instrument information in industrial facilities sometimes do not coincide with instrument classification symbols included in an information model described later. For example, there is a flowmeter in which a fluid is squeezed in a pipe by a plate called orifice and a flow rate is measured by a pressure difference (differential pressure) before and after the squeezing. Such a flowmeter is likely to be given various names such as flowmeter, orifice, and differential pressure flowmeter. In some cases, if attention is paid only to the fact that the flowmeter is an instrument that measures pressure, the flowmeter is sometimes treated as a pressure gauge. That is, one instrument is not only variously called by a company that handles the instrument during a life cycle but also sometimes given a name of instrument belonging to another classification.

The P&ID diagram, the program list, and the variable list may be associated by, for example, a tag. For example, in a case where a graphic language such as FBD is included in the P&ID diagram, a tag of a PV variable or a tag of an LP variable is described on the FBD.

Note that the instrument information is not limited to the example described above. For example, the application programs executed by the controller 50 may be included in the instrument information.

Next, an information model in the present embodiment will be described.

FIG. 8 is a diagram illustrating an example of an information model 90 according to the first embodiment. As illustrated in FIG. 8, in the present embodiment, "IEC 61987" is given as one of examples of the information model 90. The "IEC 61987" includes "Characterization" and "Libraries". Data elements included in the "IEC 61987" are hierarchical. The data elements have specific codes. A code of the "Characterization" is "ABV000" and a code of the "Libraries" is "ABV001".

The "Libraries" includes "LOPD (List of Properties For Dynamic Data)", "OLOP (Operating List of Properties, Operation Specification Configuration)", and "DLOP (Device List of Properties, machine element specification configuration)".

Classification categories and names defined in "Libraries" of the information model 90 are standardized as standards. Therefore, even instruments set in different industrial facilities or instruments manufactured by different manufacturers can be used in common. The "Libraries" of the "IEC 61987", which is the information model 90 in the present embodiment, includes classification categories of characteristics of a plurality of instruments and characteristics of a target to be measured or controlled.

More specifically, the "LOPD" is a classification category related to dynamic data to be measured or controlled by the instrument. The "OLOP" is a classification category related to a target to be measured or controlled by the instrument.

The "DLOP" defines a name of a standardized instrument. The DLOP is an example of the instrument classification symbol in the present embodiment.

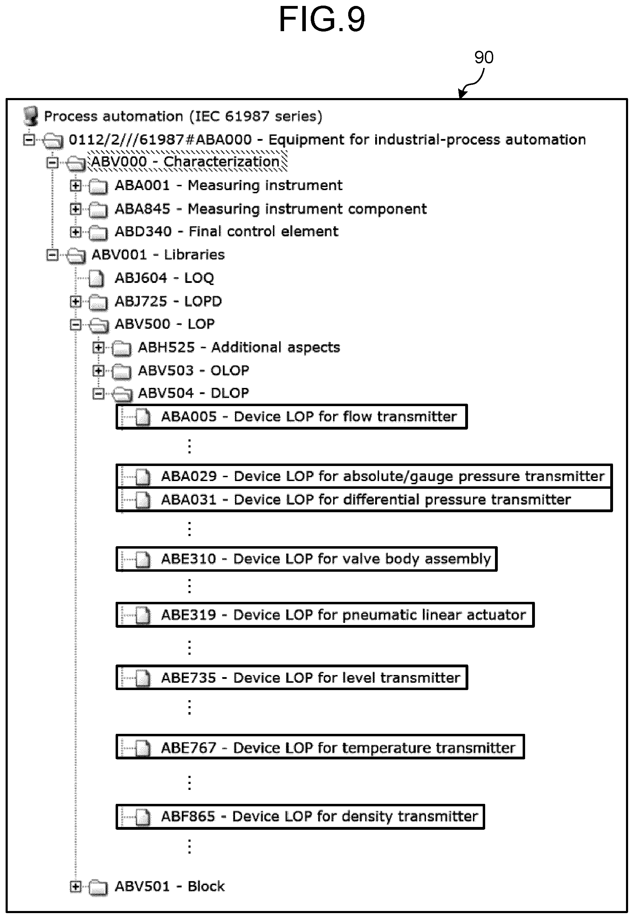

FIG. 9 is a diagram illustrating an example of an instrument classification symbol according to the first embodiment. In the DLOP, codes and names of many instruments are defined. In the present embodiment, as illustrated in FIG. 9, in the DLOP, a code "ABA005" name "Device LOP FOR flow transmitter (flowmeter)", a code "ABA029" name "Device LOP FOR absolute/gauge pressure transmitter (pressure gauge (gauge/absolute pressure)", a code "ABA031" name "Device LOP FOR differential pressure transmitter (pressure gauge (differential pressure)", a code "ABE767" name "Device LOP FOR temperature transmitter (thermometer)", a code "ABE735" name "Device LOP FOR level transmitter (level meter)", a code "ABF865" name "Device LOP FOR density transmitter (densitometer)", a code "ABE319" name "Device LOP FOR pneumatic linear actuator (actuator)", and a code "ABE310" name "Device LOP FOR valve body assembly (valve)" will be described as examples.

In the present embodiment, the determining unit 140 of the server device 20 performs mapping between the instrument included in the instrument information described above and the "DLOP". For the mapping, the specifying unit 130 defines, in accordance with the standard of the information model 90, the characteristics of the instrument included in the instrument information described above and the characteristics of the target to be measured or controlled by the instrument.

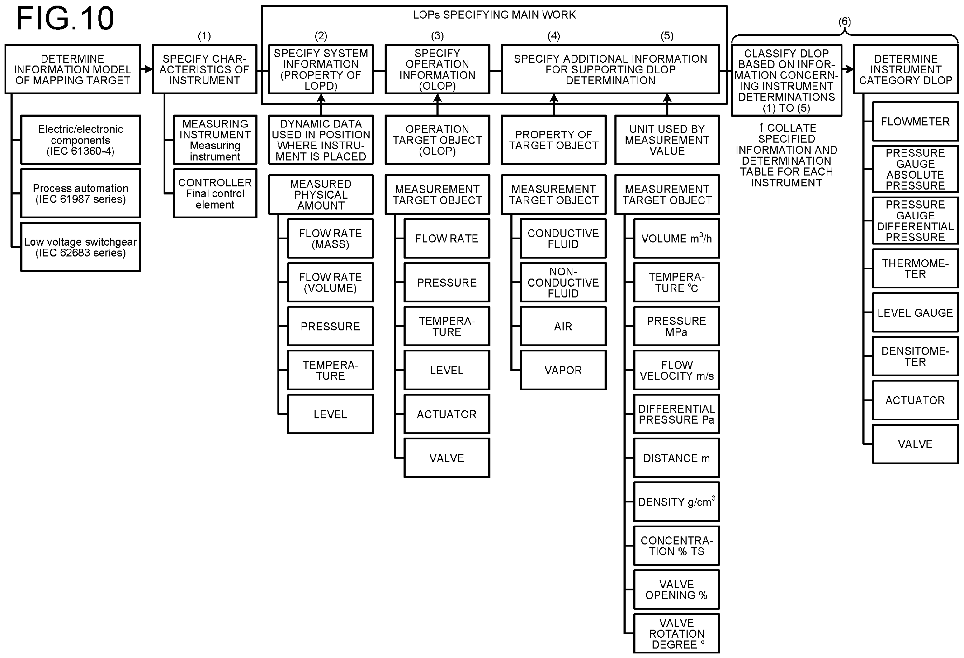

FIG. 10 is a diagram illustrating an example of an overview of a flow up to DLOP determination according to the first embodiment. As illustrated in FIG. 10, in the server device 20 of the present embodiment, after determining the information model 90 to be mapped, the specifying unit 130 (1) specifies characteristics of the instrument, (2) specifies a property of the LOPD, (3) specifies the OLOP, and (4) (5) specifies additional information for supporting the DLOP determination, for the instrument included in the instrument information. Then, the determining unit 140 (6) determines the DLOP on the basis of these pieces of information and the determination table.

In (1) of specifying the characteristics of the instrument, the specifying unit 130 specifies which of a measuring instrument and a controller (final control element) is equivalent to the instrument included in the instrument information. The specifying unit 130 determines which of the measuring instrument and the controller is equivalent to each of the instruments, on the basis of a relationship between instruments defined in the P&ID diagram or explanation of processing included in the program list and the variable list. In a case where, for example, a name of a measuring instrument such as "flowmeter" is included in NAME (name) in the list of PV variables, the specifying unit 130 determines that it is highly likely that an instrument for which the PV variables are used is a measuring instrument. Details of classification categories of a measuring instrument and a controller (final control element) in the information model 90 will be described later.

In (2) of the specifying of the property of the LOPD, the specifying unit 130 specifies a type of dynamic data used in an instrument included in the instrument information. The type of the dynamic data is, for example, a type of an output value of the instrument. In the present embodiment, the specifying unit 130 specifies to which one of a flow rate (mass), a flow rate (volume), pressure, temperature, and a level the type of the output value of the instrument corresponds. Details of classification categories of the flow rate (mass), the flow rate (volume), the pressure, the temperature, and the level in the property of the LOPD will be described later.

In (3) of the specifying of the OLOP, the specifying unit 130 determines a target object of operation of the instrument included in the instrument information. The target object of the operation is, for example, a target object represented by an output value of the instrument. In the present embodiment, the specifying unit 130 specifies, for the instrument specified as the measuring instrument in (1) of the specifying of the characteristic of the instrument, to which one of the flow rate, the pressure, the temperature, and the level the target object of the operation of the instrument corresponds. For the instrument specified as the controller in (1) of the specifying of the characteristics of the instrument, the specifying unit 130 specifies which of an actuator and a valve is the target object of the operation of the instrument. Details of the OLOP will be described later.

In (4) and (5), the specifying unit 130 specifies additional information for supporting the DLOP determination. This is because there is a case where the instrument cannot be mapped to a single DLOP only with the information specified in (1) to (3). The additional information is, for example, a property of a target object to be measured or controlled by the instrument and a measurement unit.

In (4), the specifying unit 130 specifies the property of the target object to be measured or controlled by the instrument. For example, the specifying unit 130 specifies which of "with liquid conductivity" (conductive fluid), "No liquid conductivity" (non-conductive fluid), "air", and "vaper" corresponds to the property of the target object to be measured or controlled of the instrument included in the instrument information. The property of the target object to be measured or controlled corresponds to a property of "0112/2///61987#ABB165 designation of process case" of "IEC 61987", which is the information model 90.

In (5), the specifying unit 130 specifies a unit used by a measurement value of the instrument, that is, a measurement unit. For example, the specifying unit 130 specifies, from the instrument information, which of "volume m³/h", "flow rate m/s", "mass kg", "temperature °C", "pressure MPa", "differential pressure Pa", "distance m", "density g/cm³", "concentration % TS", "valve opening %", and "valve body rotation degree ° (degrees)" corresponds to the unit used by the instrument. The specifying unit 130 specifies, for example, a unit associated with the tag in the list of PV variables in the instrument information as a unit used by the measurement value of the instrument.

Next, characteristics of the instrument, a property of the LOPD, and the OLOP of the description used in (1) to (3) of FIG. 10 will be described more specifically.

First, the characteristics of the instrument illustrated in (1) of FIG. 10 is a classification category of "Characterization" included in "IEC 61987", which is the information model 90.

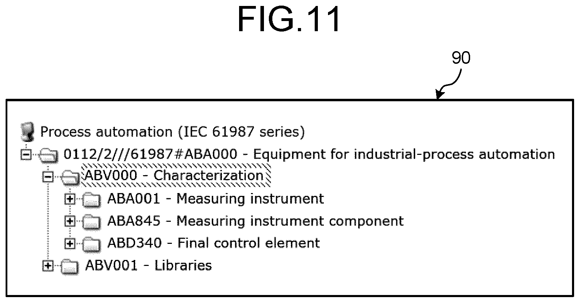

FIG. 11 is a diagram illustrating an example of classification categories of characteristics of an instrument in the first embodiment. "Characterization" of "IEC 61987" represents characteristics of the instrument. The characteristics of the instrument are classified by types of operation of the instrument. The type of the operation of the instrument is, for example, measurement or control.

Specifically, a measuring instrument is classified into "ABA001- Measuring instrument" in the "Characterization". A control instrument is classified into "ABD340- Final CONTROL element".

Next, the property of the LOPD will be described. The property of the LOPD is different depending on what kind of information is treated as an output value from the instrument.

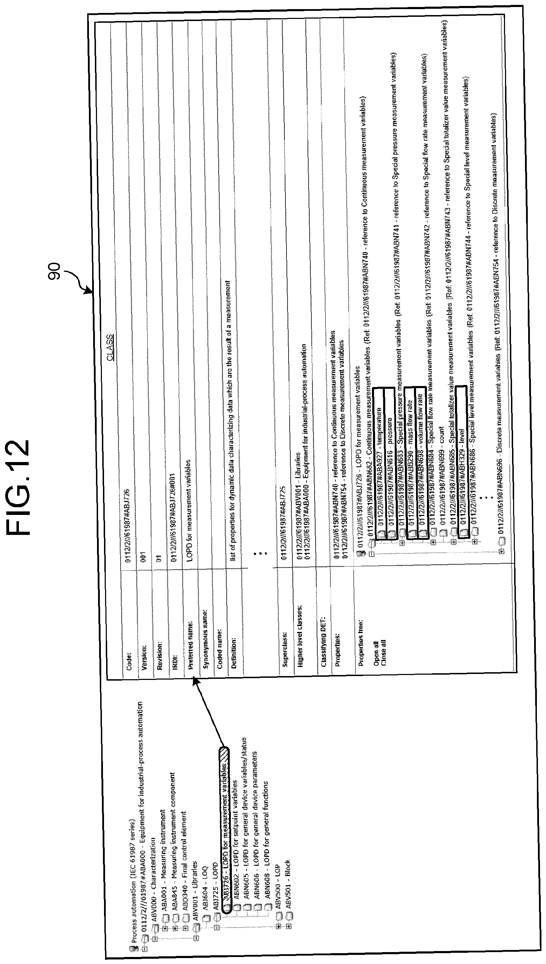

FIG. 12 is a diagram illustrating an example of a property of the LOPD in the first embodiment. In the present embodiment, the specifying unit 130 specifies the property of the LOPD from among "0112/2///61987#ABB290-mass flow rate (flow rate (mass))", "0112/2///61987#ABN698-volume flow rate (flow rate (volume))", "0112/2///61987#ABN616-pressure", "0112/2///61987#ABA927-temperature (temperature)", and "0112/2///61987#ABH329-Level (level)" defined in the property of "ABJ726- LOPD FOR measurement variables" of the LOPD.

Next, the OLOP will be described. A definition of the OLOP is different between a measuring instrument and a control instrument. In the measuring instrument, the OLOP represents a type of a measurement target. In the control instrument, the OLOP represents a type of a controlled object.

For example, in a case of a measuring instrument whose "Characterization" is "ABA001-Measuring instrument", a type of the measurement target is, for example, a flow rate, pressure, temperature, a level, or the like.

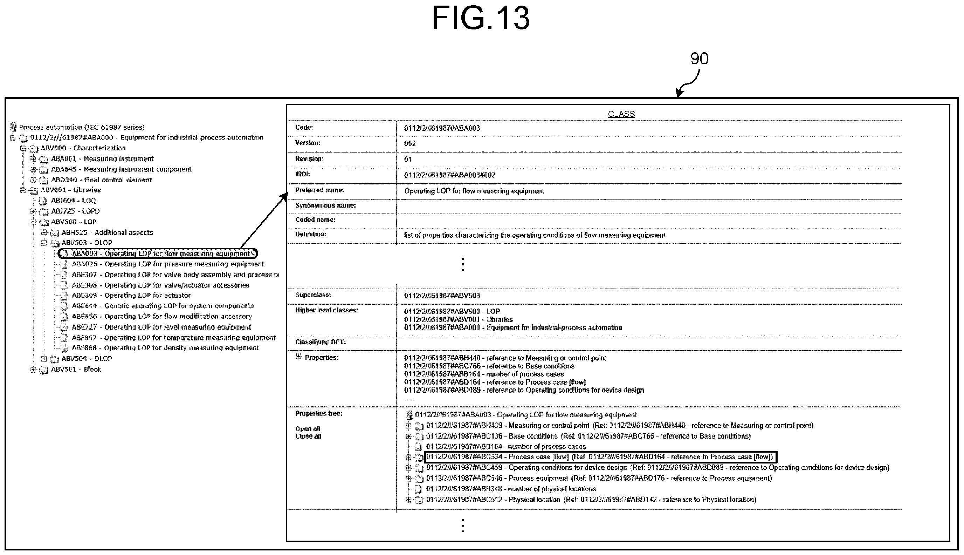

FIG. 13 is a diagram illustrating an example of an OLOP corresponding to an instrument whose measurement target is a flow rate in the first embodiment. As illustrated in FIG. 13, the instrument whose measurement target is the flow rate corresponds to a property "0112/2///61987#ABC534 - Process case (flow)" of "ABA003- Operating LOP FOR flow measuring equipment".

While, in FIG. 13, the example in which the measurement target is the flow rate is illustrated, other measurement targets are also defined in the OLOP. For example, in a case where the measurement target is the pressure, a corresponding property of this case is "0112/2///61987#ABC535 - Process case (pressure)" of "ABA026 - Operating LOP FOR pressure measuring equipment".

In a case where the measurement target is the temperature, a corresponding property of this case is "0112/2///61987#ABG451 - Process case (temperature)" of "ABF867- Operating LOP FOR temperature measuring equipment".

Moreover, in a case where the measurement target is the level, a corresponding property of this case is "0112/2///61987#ABG450 - Process case (level)" of "ABE727 - Operating LOP FOR level measuring equipment".

For example, in a case of a control instrument whose "Characterization" is "ABD340 - Final CONTROL element", a type of a controlled object is, for example, an actuator or a valve. Note that it is assumed that a regulating valve or a control valve is included in a classification of the actuator.

In a case where the type of the controlled object is the actuator, a regulating valve, or a control valve, a corresponding property of this case is "0112/2///61987#ABD353 - Actuator". In a case where the type of the controlled object is the valve, a corresponding property of this case is "0112/2///61987#ABC677".

Next, a determination table will be described.

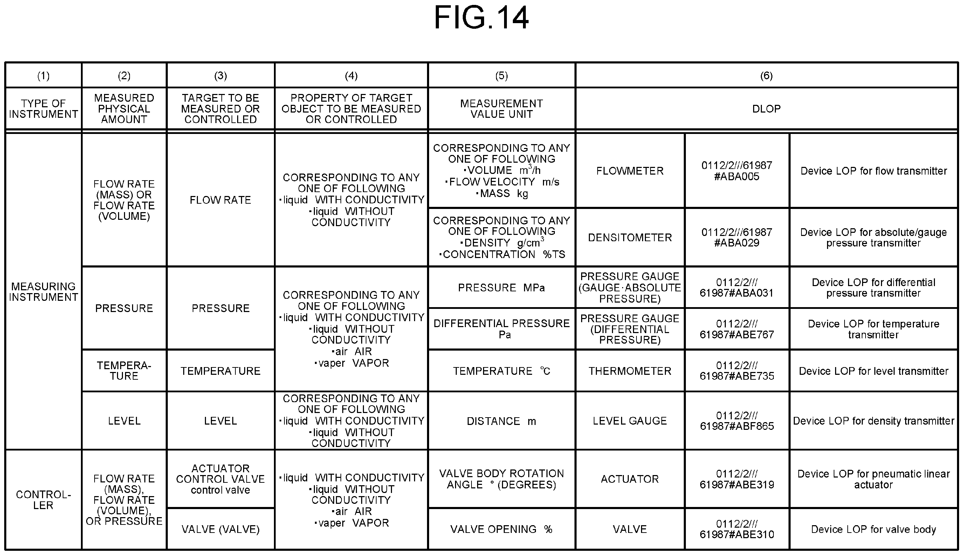

FIG. 14 is a diagram illustrating an example of a determination table according to the first embodiment. As illustrated in FIG. 14, in the determination table, items (1) to (5) specified by the specifying unit 130 and the DLOP are associated with each other. For example, in a case of an instrument whose specifying result of (1) is "measuring instrument", specifying result of (2) is "flow rate (mass)", specifying result of (3) is "flow rate", specifying result of (4) is "with liquid conductivity", and specifying result of (5) is "volume m³/h", the determining unit 140 specifies the DLOP of this instrument as a code "ABA005" and a name "Device LOP FOR flow transmitter (flowmeter)".

Next, an output form of a determination result will be described.

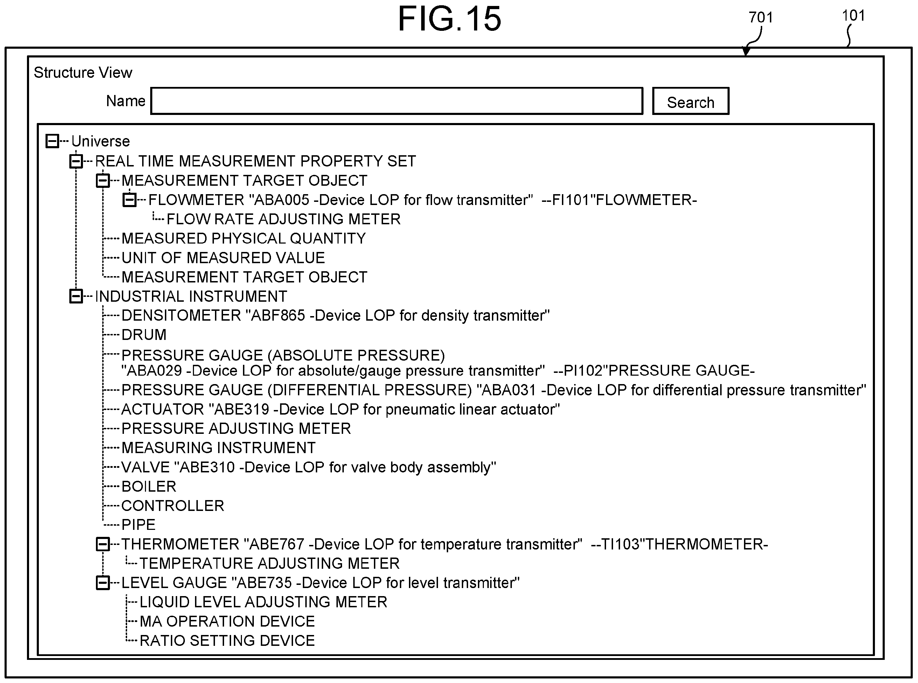

FIG. 15 is a diagram illustrating an example of a display screen of a determination result according to the first embodiment. In the example illustrated in FIG. 15, the output control unit 150 outputs a display screen 701 in which a tag linked with an instrument included in an industrial facility is associated with a hierarchical structure of the information model 90.

It is assumed that the determining unit 140 determines that instruments corresponding to DLOPs "ABA005-Device LOP FOR flow transmitter", "ABA029-Device LOP FOR absolute/gauge pressure transmitter", and "ABE767 - Device LOP for temperature TRANSMITTER" are present in the industrial facility. In this case, the output control unit 150 displays tags of variables linked with the instruments corresponding to the DLOPs are displayed in association with the DLOP on the hierarchical structure.

The output control unit 150 causes, for example, a display device 101 such as a display of the gateway device 10 to display the display screen 701. Alternatively, the output control unit 150 may output data of the hierarchical structure of the display screen 701 to the PC 30 or the PC 40 such that the display screen 701 is displayed on a display device of the PC 30 or the PC 40.

The determination result need not be based on the information model 90 hierarchy. For example, the output control unit 150 may associate the DLOPs with the tags linked with the instruments included in the industrial facility.

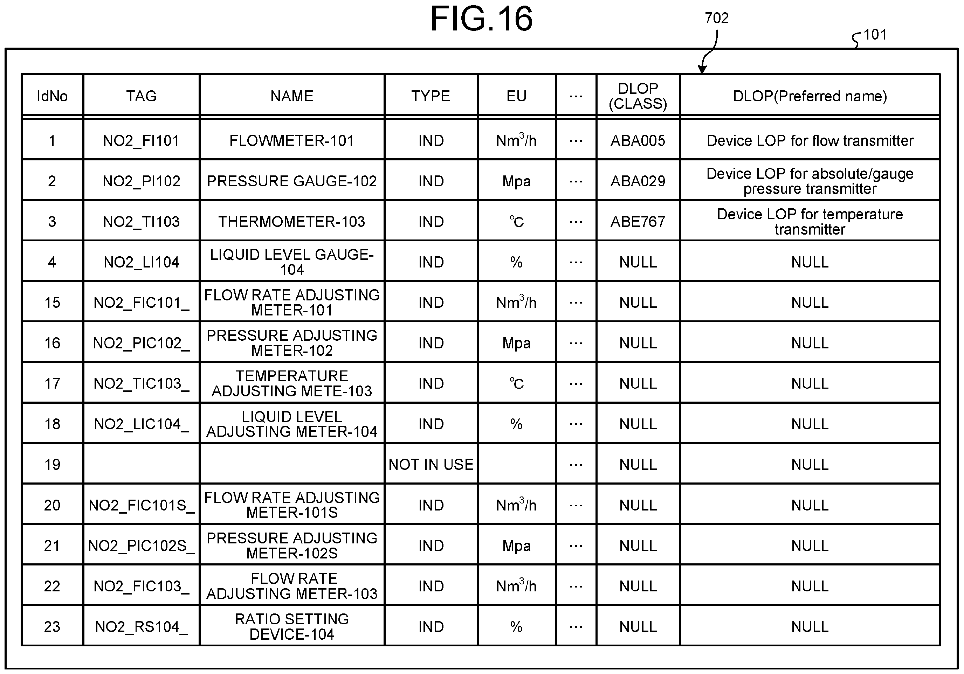

FIG. 16 is a diagram illustrating another example of the display screen of the determination result according to the first embodiment. In the example illustrated in FIG. 16, codes and names of DLOPs are associated with tags related to instruments whose DLOPs have been specified. Note that "NULL", for example, is displayed for an instrument whose DLOP has not determined by the determining unit 140.

Note that the output form of the determination result is not limited to the examples illustrated in FIGS. 15 and 16. For example, the codes and the names of the DLOPs may be associated with hierarchical structure data of the instruments included in the industrial facility.

Next, a flow of instrument classification symbol specifying processing executed by the above-described gateway device 10 will be described.

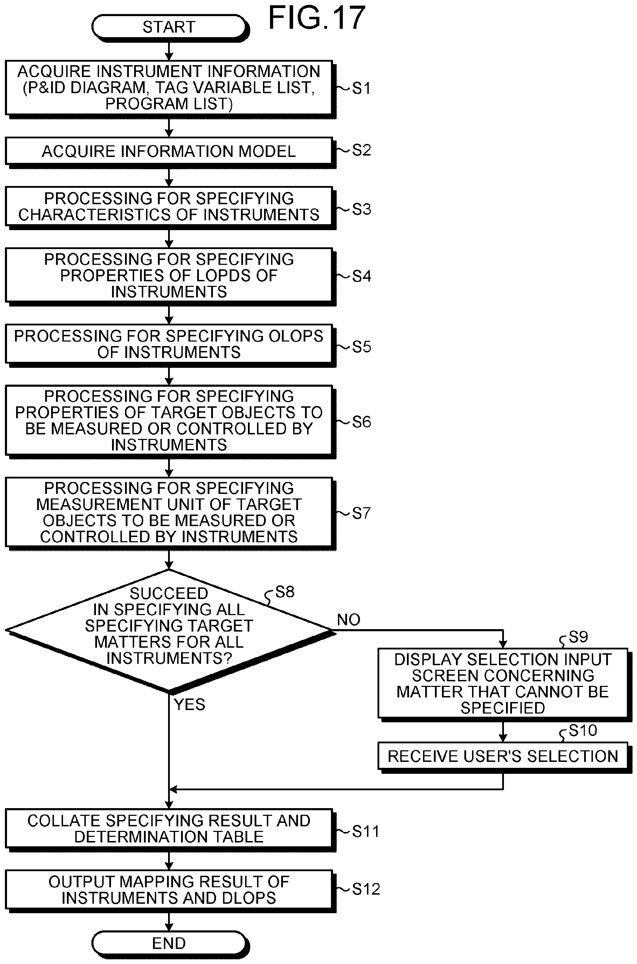

FIG. 17 is a flowchart illustrating an example of a flow of instrument classification symbol specifying processing according to the first embodiment. In FIG. 17, explanation is partially omitted about the processing already described in the overview of the flow up to the DLOP determination described above with reference to FIG. 10.

First, the acquiring unit 110 acquires instrument information, for example, a P&ID diagram, a tag variable list, and a program list from the server device 20 (S1).

In addition, the acquiring unit 110 acquires the information model 90 from a network such as the Internet (S2). Note that the acquiring unit 110 may acquire a single information model 90 selected in advance, or may acquire a plurality of information models 90 and then a user may select one of the information models 90.

Subsequently, the specifying unit 130 extracts instruments included in an industrial facility from the acquired P&ID diagram, the acquired tag variable list, and the acquired program list and executes processing for specifying characteristics of the extracted instruments (S3). This processing is the processing of "(1) specifying characteristics of an instrument" described above with reference to FIG. 10.

Subsequently, the specifying unit 130 executes processing for specifying properties of LOPDs of the instruments (S4). This processing is the processing of "(2) specifying a property of the LOPD" described above with reference to FIG. 10.

Subsequently, the specifying unit 130 executes processing for specifying OLOPs of the instruments (S5). This processing is the processing of "(3) specifying an OLOP" described above with reference to FIG. 10.

Subsequently, the specifying unit 130 executes processing for specifying properties of target objects to be measured or controlled of the instruments (S6). This processing is the processing of (4) described above with reference to FIG. 10.

Subsequently, the specifying unit 130 executes processing for specifying a measurement unit of the target object to be measured or controlled by the instruments (S7). This processing is the processing of (5) described above with reference to FIG. 10.

The specifying unit 130 determines whether the specifying unit 130 succeeds in specifying all specifying target items in the processing of S3 to S7 for all the instruments extracted from the instrument information (S8).

In a case where there is an item that cannot be specified in any instrument (S8 "No"), the output control unit 150 causes a display device to display a selection input screen related to the item that cannot be specified (S9). On the selection input screen, candidates of characteristics of the instrument or candidates of characteristics of a target to be measured or controlled by the instrument are displayed.

The receiving unit 120 receives user's selection for the candidates of the characteristics of the instrument or the characteristics of the targets to be measured or controlled by the instrument displayed on the selection input screen (S10). Subsequently, the processing proceeds to S11.

In a case where there is no item that cannot be specified (S8 "Yes"), the processing proceeds from S8 to S11.

The determining unit 140 collates a specifying result and the determination table and determines a DLOP corresponding to the instrument included in the instrument information (S11).

The output control unit 150 outputs a result of mapping between the instruments and the DLOPs determined by the determining unit 140 (S12). The processing of this flowchart ends.

As described above, the gateway device 10 of the present embodiment acquires the instrument information related to the instrument included in the industrial facility and the standardized information model 90 and determines, on the basis of the instrument information, the DLOP corresponding to the instrument included in the industrial facility from among the DLOPs included in the information model 90. The gateway device 10 outputs a result of mapping between the instrument and the DLOP. Therefore, with the gateway device 10 in the present embodiment, it is possible to easily map the individual instruments used in the industrial facility to the DLOP to which the instruments belong in the standard specifications.

For example, in a case of mapping instruments included in an existing industrial facility to DLOPs later, the number of instruments of mapping targets is large. In this case, if the administrator manually performs mapping to the DLOPs, workload of the administrator is high. Even in a case where the mapping to the DLOPs is already performed, if the administrator manually performs mapping to the DLOPs when some instrument is replaced or added, the workload of the administrator is high and it is likely that omission of the mapping occurs.

In contrast, the gateway device 10 according to the present embodiment is able to automatically perform mapping to the DLOP on the basis of the instrument information related to the instrument included in the industrial facility. Therefore, it is possible to reduce the workload of the administrator and reduce omission of the mapping.

The gateway device 10 in the present embodiment specifies the characteristics of the instrument and the characteristics of the target to be measured or controlled by the instrument on the basis of the instrument information and determines the DLOP corresponding to the instrument on the basis of the specified characteristics of the instrument and the characteristics of the target to be measured or controlled by the instrument and the determination table. Therefore, with the gateway device 10 of the present embodiment, it is possible to determine the DLOP by utilizing the information related to design or management of the instrument of the industrial facility even if the administrator does not create information exclusive for determination of the DLOP. Therefore, it is possible to reduce the load on the administrator at the time of determining the DLOP, reduce omission of information related to the instrument to be determined, and perform conventional industrial facility design and management without being conscious of the instrument information.

In the present embodiment, the characteristics of the instrument are classified by types of operation of the instrument. The characteristics of the target to be measured or controlled by the instrument include a type of information used by the instrument for operation, the target to be measured or controlled by the instrument, the property of the target to be measured or controlled by the instrument, and the measurement unit of the target to be measured or controlled by the instrument. With the gateway device 10 of the present embodiment, by specifying these pieces of information related to the instrument, it is possible to clarify a difference between the individual instruments and facilitate determination of the DLOPs corresponding to the instruments.

The information model 90 in the present embodiment includes classification categories of characteristics of a plurality of instruments and characteristics of a target to be measured or controlled. The gateway device 10 in the present embodiment specifies a classification category defined in the information model 90 corresponding to characteristics of an instrument and characteristics of a target to be measured or controlled by the instrument. As described above, according to the gateway device 10 in the present embodiment, the characteristics of the plurality of instruments and the characteristics of the target to be measured or controlled are specified by the classification categories defined in the information model 90. Accordingly, the characteristics of the instrument included in the industrial facility can be expressed by a standardized standard.

The instrument information in the present embodiment includes the P&ID diagram defining the configurations of the instruments included in the industrial facility. Therefore, with the gateway device 10 in the present embodiment, it is possible to specify characteristics of an instrument and characteristics of a target to be measured or controlled on the basis of positional relation among the instruments included in the industrial facility.

The instrument information in the present embodiment includes definition information of processing for controlling the instrument included in the industrial facility and definition information of variables used in the processing. Therefore, with the gateway device 10 in the present embodiment, it is possible to specify characteristics of the instrument and characteristics of the target to be measured or controlled on the basis of processing that actually operates in the industrial facility.

When it is difficult to specify characteristics of the instrument and characteristics of the target to be measured or controlled by the instrument, the gateway device 10 in the present embodiment causes the display device to display candidates of the characteristics of the instrument or candidates of the characteristics of the target to be measured or controlled by the instrument. The gateway device 10 in the present exemplary embodiment receives user's selection for candidates of characteristics of the instrument or candidates of characteristics of the target to be measured or controlled by the instrument. Therefore, with the gateway device 10 in the present embodiment, even when it is difficult to automatically specify characteristics of the instrument and characteristics of the target to be measured or controlled by the instrument, information for determining the DLOP can be acquired. With the gateway device 10 in the present embodiment, by presenting to the user which item is not successfully specified, it is possible to reduce occurrence of omission of mapping of the instrument without being noticed by the user.

Note that, in the present embodiment, the determination table is illustrated as an example of the determination information. However, the determination information is not limited to a table format. For example, the determination information may be a determination condition described in a program.

### (Second Embodiment)

In the first embodiment described above, the industrial management system S1 includes the OPC-UA gateway device 10, the OPC-UA server device 20, the PC 30, the PC 40, and the controller 50. The configuration of the industrial management system is not limited to the configuration above. In the present embodiment, the industrial management system does not include the OPC-UA gateway device 10 and the OPC-UA server device 20.

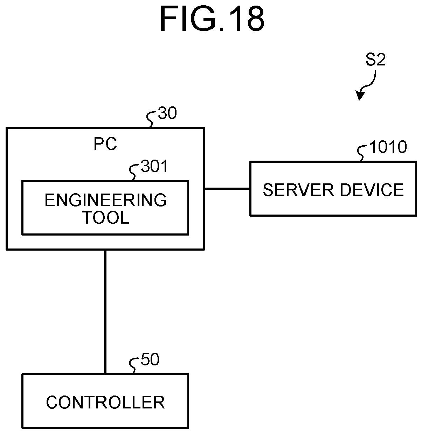

FIG. 18 is a diagram illustrating an example of an industrial management system S2 according to a second embodiment. As illustrated in FIG. 18, the industrial management system S2 in the present embodiment includes a server device 1010, the PC 30, and the controller 50.

The server device 1010 includes, for example, a control device such as a CPU, a storage device such as a ROM and a RAM, an external storage device such as an HDD and a CD drive device, a display device (a display unit) such as a display device, and an input device such as a keyboard and a mouse and has a hardware configuration in which a normal computer is used. The server device 1010 includes functions similar to the functions of the OPC-UA gateway device 10 in the first embodiment described above with reference to FIG. 2. More specifically, the server device 1010 in the present embodiment includes the acquiring unit 110, the receiving unit 120, the specifying unit 130, the determining unit 140, the output control unit 150, and the storing unit 160. The server device 1010 is an example of an instrument classification symbol specifying device in the present embodiment.

In the present embodiment, the acquiring unit 110 of the server device 1010 acquires instrument information from the PC 30 including the engineering tool 301. The specifying unit 130 of the server device 1010 specifies characteristics of an instrument and characteristics of a target to be measured or controlled by the instrument on the basis of the instrument information acquired from the PC 30 as in the first embodiment.

In this manner, with the server device 1010 in the present embodiment, it is possible to specify an instrument classification symbol even when an OPC-UA server device and an OPC-UA gateway device are absent.

An instrument classification symbol specifying program executed by the gateway device 10 or the server device 1010 in the first and second embodiments described above is provided by being recorded in a computer-readable recording medium such as a CD-ROM, a flexible disk (FD), a CD-R, or a DVD (Digital Versatile Disk) as a file in an installable format or an executable format.

The instrument classification symbol specifying program executed by the gateway device 10 or the server device 1010 in the first and second embodiments may be stored on a computer connected to a network such as the Internet and provided by being downloaded via the network. The instrument classification symbol specifying program executed by the gateway device 10 or the server device 1010 in the first and second embodiments may be provided or distributed via a network such as the Internet.

The instrument classification symbol specifying program executed by the gateway device 10 or the server device 1010 in the first and second embodiments may be provided by being incorporated in advance in a ROM or the like.

The instrument classification symbol specifying program executed by the gateway device 10 or the server device 1010 in the first and second embodiments has a module configuration including the units (the acquiring unit, the receiving unit, the specifying unit, the determining unit, and the output control unit) described above. As actual hardware, a CPU (a processor) reads the program from the storage medium and executes the program, whereby the units are loaded on a main storage device and the acquiring unit, the receiving unit, the specifying unit, the determining unit, and the output control unit are generated on the main storage device.

As described above, according to the first embodiment and the second embodiment, it is possible to easily map the individual instruments used in the industrial facility to the instrument classification symbols to which the instrument belong in the standard specification.

While the embodiments of the present invention have been described above, the embodiments are presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the scope of equivalents thereof.

## Claims

1. An instrument classification symbol specifying device comprising:
an acquiring unit configured to acquire instrument information and a standardized information model, the instrument information being related to an instrument included in an industrial facility, the standardized information model including instrument classification symbols of a plurality of instruments;
a determining unit configured to determine an instrument classification symbol corresponding to the instrument on the basis of the instrument information, the instrument classification symbol being determined from the instrument classification symbols included in the information model; and
an output control unit configured to output a result of mapping between the instrument and the instrument classification symbol determined by the determining unit.

2. The instrument classification symbol specifying device according to claim 1, further comprising a specifying unit configured to specify, on the basis of the instrument information, characteristics of the instrument and characteristics of a target to be measured or controlled by the instrument,
wherein the determining unit determines an instrument classification symbol corresponding to the instrument on the basis of
determination information in which the characteristics of the instrument and the characteristics of the target to be measured or controlled by the instrument are associated with the instrument classification symbol, and
the characteristics of the instrument and the characteristics of the target to be measured or controlled by the instrument specified by the specifying unit.

3. The instrument classification symbol specifying device according to claim 2, wherein
the characteristics of the instrument are classified by types of operation of the instrument, and
the characteristics of the target to be measured or controlled by the instrument include a type of information used by the instrument for operation, the target to be measured or controlled by the instrument, a property of the target to be measured or controlled by the instrument, and a measurement unit of the target to be measured or controlled by the instrument.

4. The instrument classification symbol specifying device according to claim 2 or 3, wherein
the information model includes classification categories of characteristics of the plurality of instruments and characteristics of targets to be measured or controlled, and
the specifying unit specifies the classification category defined in the information model corresponding to the characteristics of the instrument and the characteristics of the target to be measured or controlled by the instrument.

5. The instrument classification symbol specifying device according to any one of claims 1 to 4, wherein the instrument information includes a piping instrumentation diagram defining a configuration of the instrument included in the industrial facility.

6. The instrument classification symbol specifying device according to any one of claims 1 to 5, wherein the instrument information includes
definition information of processing for controlling the instrument included in the industrial facility, and
definition information of variables used in the processing.

7. The instrument classification symbol specifying device according to claim 6, wherein
the definition information of the processing is a list of programs for controlling the instrument, and
the definition information of the variables is a list of tag variables in which a tag, a name, and attribute information of a variable related to operation of the instrument out of the variables used in the processing are associated with each other.

8. The instrument classification symbol specifying device according to claim 2, wherein, when the specifying unit has difficulty in specifying the characteristics of the instrument and the characteristics of the target to be measured or controlled by the instrument, the output control unit causes a display unit to display candidates of the characteristics of the instrument or candidates of the characteristics of the target to be measured or controlled by the instrument.

9. The instrument classification symbol specifying device according to claim 8, further comprising a receiving unit configured to receive user's selection for the candidates of the characteristics of the instrument or the candidates of the characteristics of the target to be measured or controlled by the instrument displayed on the display unit.
